(19) Europäisches Patentamt
European Patent Office
Office européen des brevets

(11) **EP 4 552 486 A1**

(12) **EUROPEAN PATENT APPLICATION**

(43) Date of publication:
**14.05.2025 Bulletin 2025/20**

(21) Application number: **24168657.5**

(22) Date of filing: **05.04.2024**

(51) International Patent Classification (IPC):
**A01K 5/00** $^{(2006.01)}$     **G01N 21/3563** $^{(2014.01)}$
**G01N 21/359** $^{(2014.01)}$

(52) Cooperative Patent Classification (CPC):
**A01K 5/001; G01N 21/3563; G01N 21/359**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.11.2023 EP 23208976**

(71) Applicant: **DINAMICA GENERALE S.p.A**
**46025 Poggio Rusco (IT)**

(72) Inventors:
• **BARBI, Alberto**
  **46025 POGGIO RUSCO (MN) (IT)**
• **BERTOLANI, Nicola**
  **46025 POGGIO RUSCO (MN) (IT)**

(74) Representative: **Studio Torta S.p.A.**
**Via Viotti, 9**
**10121 Torino (IT)**

(54) **METHOD FOR MONITORING THE HOMOGENEITY OF A MIXTURE OF ANIMAL FEEDING INGREDIENTS IN A MIXER WAGON**

(57)     Method for monitoring the homogeneity of a mixture of ingredients for animal feed in a mixer wagon (1), wherein an electromagnetic spectrum analyser (15) acquires a sequence of reflectance spectra of the mixture in the tank(5) or in an outlet ramp (14) of the mixer wagon (1) at respective and consecutive time instants during the mixing of the ingredients or during the distribution of the mixture in a trough, the reflectance spectra are processed to obtain respective absorbance spectra ($A_i$), variations between each pair of consecutive absorbance spectra or between pairs of consecutive mean absorbance spectra are determined, for each variation a respective weighted variation is determined as a function of an elapsed time ($Tpass_i$) from the start of the mixing process to the determination instant of the variation or an actual duration of the mixing ($Tmix_{Act}$), and a target duration of the mixing ($Tmix_{Targ}$), and the homogeneity of the mixture is evaluated based on the weighted variations.

FIG.2

EP 4 552 486 A1

## Description

### Cross reference to related patent Applications

This patent application claims priority of European patent application no. 23208976.3 filed on 10 November 2023, the content of which is incorporated herein by reference.

### Technical field

The present invention relates to a method for monitoring the homogeneity of a mixture of ingredients of an animal feed recipe inside a container of a mixer wagon or at an outlet device of the mixer wagon.

In particular, the present invention finds advantageous, but not exclusive, application in the optimal management of a recipe of ingredients for feeding ruminant livestock, to which the following description will make explicit reference without losing generality.

### Background

The feed commonly used for ruminant animals on most modern farms is represented by a single mixture distributed in a trough. This feed is obtained by mixing together different ingredients such as hay, silage, grains, water, supplements, and is referred to in technical jargon as TMR (Total Mixed Ration), or Unifeed. The animals are typically divided into homogeneous groups according to their nutritional needs and a nutritionist defines, for each group of animals, an optimal recipe of ingredients to meet the needs of the animals in that group of animals. The recipe defines the order wherein the ingredients are loaded, the quantity of each ingredient per head of livestock and the resulting total weight of the ration per group of animals, which is obtained as the sum of the contributions of the different ingredients, and the contribution of each ingredient is obtained by multiplying the weight of the ingredient by the number of animals in the group. Consequently, different groups of animals are fed with different recipes in terms of type and quantity of ingredients.

The mixture, or TMR, is created by loading one ingredient at a time inside a tank of a mixer wagon and adjusting the quantity by weight of each ingredient which is loaded, as a function of the weight measured by load cells applied to the tank and as a function of chemical and physical parameters of the ingredient which is loaded, such physical and chemical parameters being determined based on measurements of the electromagnetic spectrum reflected and/or absorbed by the mixture performed with an optoelectronic instrument, e.g., a Near InfraRed (NIR) analyser. In order for the measurements made with the optoelectronic instrument to be reliable, the mixture of ingredients already in the tank must reach a sufficient degree of homogeneity.

A sufficient degree of homogeneity must also be achieved at the end of the mixing process before distributing the mixture in the trough. In fact, if the mixture has a poor homogeneity, the animal would easily go to select those ingredients which are most palatable, thus negating one of the most important advantages of TMR, namely providing a balanced ration capable of preventing metabolic imbalances in the animal.

Systems are known for determining the homogeneity of the mixture in the tank of a mixer wagon by exploiting measurements of an NIR analyser.

German Patent Application no. DE102010033886A1 describes a system which acquires a sequence of reflectance spectra of the mixture in the tank of a mixer wagon to predict quantities of nutrients, e.g., dry matter, protein, fibre, and determine their variation over time by calculating the standard deviation referring to a particular nutrient, e.g., dry matter. When the standard deviation falls below a certain threshold, it is assumed that the desired homogeneity has been achieved.

European Patent Application no. EP4223147A1 describes a system which performs an analysis of reflectance spectra acquired in time sequence during the mixing process. In particular, a linear transformation also known as Principal Component Analysis (PCA) is applied to the reflectance spectra. The mixture will reach the desired homogeneity when the number of acquired and transformed spectra, having relative distances comprised between the mean value and a multiple of the standard deviation, exceeds a predetermined threshold.

The systems described above for determining the homogeneity of the mixture in the tank of a mixer wagon are very costly in terms of the computing resources required, processing time and economic resources to build and update the predictive models which when applied to the acquired spectra allow the nutrients in the TMR to be predicted. In particular, the systems described above require rather long processing times which introduce significant delays in the evaluation of the level of homogeneity achieved. In more detail, the system described in application DE102010033886A1 requires accurate predictive models for the TMR, with consequent high costs for creating and subsequently updating the models. The system described in application EP4223147A1 must perform complex calculations for the linear transformation of the acquired spectra.

### Summary

The aim of the present invention is to provide a method for monitoring the homogeneity of a mixture of ingredients in a mixer wagon, which method is free of the drawbacks described above and, at the same time, is easy and inexpensive to implement.

In accordance with the present invention, a method for monitoring the homogeneity of a mixture of ingredients for animal feed inside a container of a mixer wagon, and an apparatus for mixing ingredients of an animal feed recipe, as defined in the appended claims, are provided.

The claims describe preferred embodiments of the present invention, to be considered an integral part of the present description.

Brief description of the drawings

The present invention will now be described with reference to the attached drawings, which illustrate show a non-limiting embodiment thereof, wherein:

- figure 1 illustrates a perspective view from one side of a mixer wagon configured to implement the method of the present invention;
- figure 2 illustrates the mixer wagon according to a perspective view from the opposite side; and
- figure 3 illustrates the mixer wagon according to the perspective view of figure 1 during a different implementation of the method of the present invention.

Description of embodiments

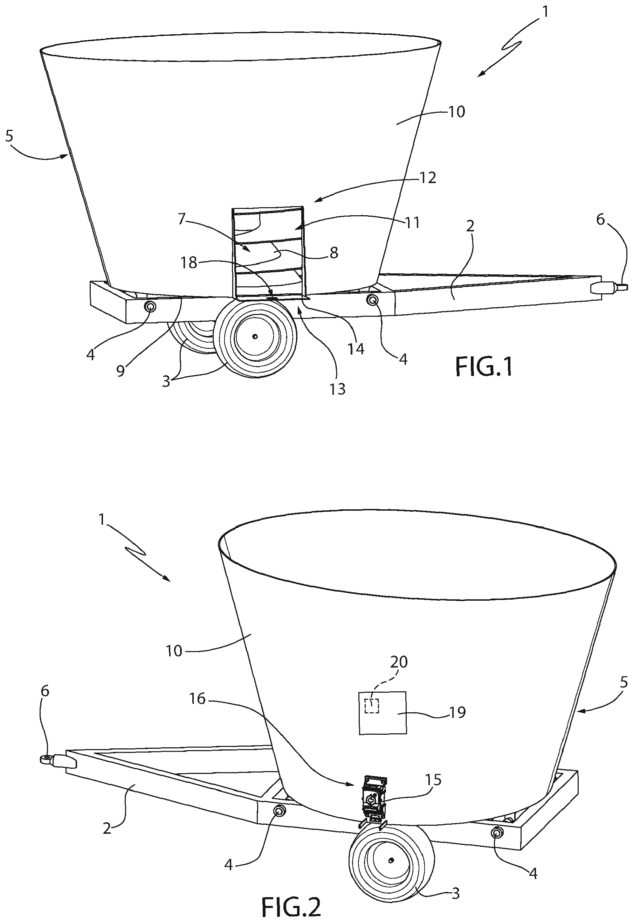

In figures 1 to 3, a mixer wagon for mixing the ingredients of a recipe for feeding animals, and in particular ruminant livestock, is indicated overall with 1. The recipe ingredients comprise, for example, hay, silage, grains, water, supplements.

The mixer wagon 1 comprises a frame 2 provided with wheels 3, a plurality of load cells 4, and in particular four load cells 4 mounted at the corners of a rectangular portion of the frame 2, and a container, and in particular a tank 5, which is mounted on the load cells 4 to weigh the contents of the tank 5. In the example shown, the mixer wagon 1 is of the towed type and therefore the frame 2 is provided with a towing eye 6.

The mixer wagon 1 comprises a motorised mixing system 7, which is applied to the tank 5 for mixing the ingredients in the tank 5. The mixing system 7 comprises, for example, an auger 8 (figure 1) with a vertical axis, designed to rotate inside the tank 5, and a motor (not illustrated) for rotating the auger 8.

The tank 5 is open above to be able to receive the ingredients. In particular, the tank 5 has a bottom 9, on the inner side of which the auger 8 is mounted, and a side wall 10, which surrounds the bottom 9. The tank 5 has an outlet opening 11, obtained in a portion 12 of the side wall 10 adjacent to the bottom 9 to let out the mixture, i.e., the TMR, at the end of a mixing process.

Hereinafter, mixing process is intended as the entire process which comprises loading the ingredients one at a time into the tank 5 and mixing the ingredients as they are loaded into the tank 5 until reaching the mixture ready for distribution.

The mixer wagon 1 comprises an outlet device 13 for the exit of the mixture during a distribution process of the mixture into a trough (not illustrated) following the mixing process. The outlet device 13 comprises an exit ramp 14 which projects outside the tank 5 from a lower side of the outlet opening 11. Preferably, the outlet device 13 comprises a hatch (not illustrated) for closing the outlet opening 11 so as to retain the ingredients in the tank 5 during the mixing process.

According to an alternative embodiment not illustrated, the unloading outlet comprises a conveyor belt, which has an inlet end communicating with the outlet opening 11 to withdraw the mixture exiting from the tank 5, and the outlet ramp is connected to the exit end of the conveyor belt.

With reference to a mode of use illustrated by figure 2, the mixer wagon 1 comprises an electromagnetic spectrum analyser 15, which is mounted on the tank 5 with a reading window thereof (not visible in figure 2) facing towards the inside of the tank 5 to acquire reflectance spectra of the mixture in the tank 5 during the mixing process.

The electromagnetic spectrum analyser 15 is an optoelectronic instrument of known type designed to provide reflectance spectra of electromagnetic radiation in a range of the electromagnetic spectrum comprising visible light and/or infrared radiation. Preferably, the electromagnetic spectrum analyser 15 operates in what is known as the near-infrared (NIR) range of electromagnetic radiation and is therefore also commonly called NIR analyser.

The electromagnetic spectrum analyser 15 comprises an electromagnetic radiation source to 'illuminate' the mixture and an electromagnetic radiation sensor to acquire the electromagnetic radiation reflected by the mixture. The reflectance spectrum provided by the electromagnetic spectrum analyser 15 in practice comprises a plurality of reflectance values acquired for a corresponding plurality of wavelength values in the electromagnetic spectrum range wherein the electromagnetic spectrum analyser 15 operates.

The electromagnetic spectrum analyser 15 further comprises a processing unit thereof to process the reflectance spectra in order to obtain other quantities related to the mixture, as will be explained in detail hereinafter.

Always with reference to figure 2, the electromagnetic spectrum analyser 15 is mounted on the tank 5 so that its reading window is placed in a portion 16 of the side wall 10 of the tank 5, near the bottom 9 and substantially opposite the portion 12 wherein the outlet opening 11 is obtained. In other words, the reading window of the electromagnetic spectrum analyser 15 is placed in front of a portion of the internal volume of the tank 5 wherein there is reasonably always a good quantity of mixture kept moving by the auger 8. In particular, the reading window is a few tens of centimetres away from the bottom 9 so that it is in front of a portion of the internal volume of the tank 5 wherein there is a high flow of mixture.

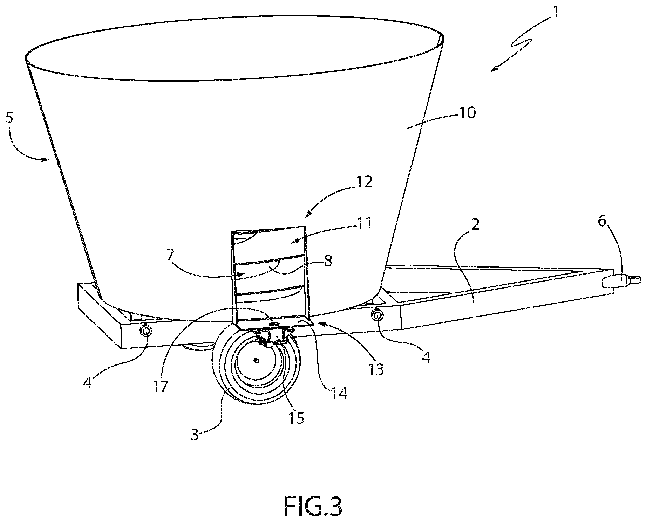

With reference to the mode of use illustrated by figure 3, the electromagnetic spectrum analyser 15 is mounted at the outlet device 13, and in particular below the outlet ramp 14 with the reading window 17 thereof facing the flow of mixture passing through the outlet ramp 14 to acquire reflectance spectra of the mixture during the mixture distribution process. In particular, the outlet ramp 14 has a through opening 18 (figure 1) and the electromagnetic spectrum analyser 15 has the reading window 17 coupled with the opening 18 and facing upwards.

Finally, the mixer wagon 1 comprises a processing and control unit 19 (figure 2), which is integral, for example, with the frame 2 or with the tank 5, comprises a memory 20 for storing parameters and reference data, is designed to receive data from the electromagnetic spectrum analyser 15 and weight values from the load cells 4, and is optionally designed to control the mixing system 7.

The processing and control unit 19 and the processing unit of the electromagnetic spectrum analyser 15 are configured to implement the method for monitoring the homogeneity of the mixture of ingredients described hereinafter.

The method for monitoring the homogeneity of a mixture of ingredients will be described with reference to the two modes of use illustrated in figures 2 and 3. As mentioned above, the mode of use of figure 2 refers to monitoring of the homogeneity of the mixture in the tank 5 during the mixing process, while the mode of use of figure 3 refers to monitoring the homogeneity of the mixture in the outlet device 13 during the distribution process.

With reference to the mode of use of figure 2, the electromagnetic spectrum analyser 15 acquires a sequence of reflectance spectra of the mixture in the tank 5 at respective and consecutive time instants, according to a preestablished measurement period, during the mixing process.

The processing unit of the electromagnetic spectrum analyser 15 processes the acquired reflectance spectra to obtain respective absorbance spectra of the mixture. In particular, the absorbance value for the j-th wavelength is calculated with the following known formula:

$$a_j = -\log_{10}\left(\frac{rc_j - rd_j}{rr_j - rd_j}\right)$$

wherein $rc_j$ is the reflectance value of the mixture acquired for the j-th wavelength, $rr_j$ is a reference reflectance value which is measured on an inorganic, stable material characterised by reflectance levels much higher than those of the mixture to be analysed, and $rd_j$ is the reflectance value of the mixture reading 'dark', i.e., the reflectance value of the mixture when the light source is switched off. Since the relation $rr_j > rc_j > rd_j$ is always valid for each j-th wavelength, then the absorbance values $a_j$ are always positive.

Hereinafter, $A_i$ will denote the absorbance spectrum acquired at the i-th time instant of the mixing process and representable as a vector of absorbance values $a_{ji}$ acquired at the i-th time instant for the j-th wavelength.

In essence, the absorbance spectrum at the i-th time instant $A_i$ comprises a plurality of absorbance values obtained at the i-th time instant for a corresponding plurality of wavelength values, preferably in the near-infrared electromagnetic radiation range.

The processing and control unit 19 receives the sequence of absorbance spectra from the electromagnetic spectrum analyser 15 and performs the following.

For each pair of consecutive absorbance spectra $A_{i-1}$ and $A_i$, i.e., at the generic i-th time instant, a respective spectrum variation is determined.

According to a further alternative embodiment, the spectrum variation at a generic i-th time instant is determined based on a pair of consecutive mean absorbance spectra $\overline{A_{i-1}}$ and $\overline{A_i}$, each mean absorbance spectrum being calculated as the average of the last consecutive absorbance spectra within a moving time window ending with the i-th time instant, i.e., according to the formula:

$$\overline{A_i} = \frac{\left(\sum_{k=0}^{N-1} A_{i-k}\right)}{N}$$

wherein N is the number of time instants in the moving time window. For each spectrum variation obtained at the i-th time instant, a respective weighted variation is determined as a function of the elapsed time from the beginning of the mixing process to the i-th time instant, indicated hereinafter by $Tpass_i$, and as a function of an objective duration of the mixing process, indicated hereinafter by $Tmix_{Targ}$.

At this point, the homogeneity of the mixture is evaluated based on the weighted variations. In other words, the weighted variations are considered an index of the homogeneity of the mixture.

Advantageously, the mixing system 7 is stopped to suspend the mixing process when a certain desired degree of homogeneity is reached. At this point, the mixture can be distributed in a trough (not illustrated) by controlling the opening of the hatch associated with the outlet opening 11 and the mixing system 7 to rotate the auger 8 so as to favour the exit of the mixture from the outlet opening 11.

Advantageously, the spectrum variation at the i-th instant comprises a respective Euclidean distance or a respective squared Euclidean distance between the two vectors representing the pair of consecutive absorbance spectra $A_{i-1}$ and $A_i$. In particular, the Euclidean distance at the i-th time instant d is calculated with the following formula:

$$d_{i-1,i} = \sqrt[2]{\sum_{j=1}^{n} (a_{j,i-1} - a_{j,i})^2}$$

wherein n is the number of wavelengths of each absorbance spectrum, $a_{j,i}$ or more simply $a_{ji}$, is a value of the vector corresponding to the absorbance spectrum acquired for a j-th wavelength at the i-th time instant and therefore $a_{ji-1}$ is a value of the vector corresponding to the absorbance spectrum obtained for the same wavelength at the time instant preceding the i-th time instant.

According to a further embodiment, the vectors for which the Euclidean distance is calculated are obtained from a processing of the absorbance spectra $A_{i-1}$ and $Ai$ which involves a mathematical treatment using what is known as the Standard Normal Variation (SNV).

With reference to the above embodiment which determines the spectrum variation based on a pair of consecutive mean $\overline{A_{I-1}}$ and $\overline{A_I}$ absorbance spectra, the spectrum variation at the generic i-th time instant comprises a respective mean Euclidean distance or a respective squared mean Euclidean distance calculated between two representative vectors of the consecutive mean absorbance spectra obtained in the manner described above.

Advantageously, the weighted variation at the i-th time instant is equal to the product of the respective spectrum variation by a respective weight JVi, which is calculated by means of the following formula:

$$W_i = 1/\log_2 \left(1 + \frac{Tpass_i}{Tmix_{Targ}}\right)$$

wherein $Tpass_i$ is the elapsed time from the beginning of the mixing process to the i-th time instant and $Tmix_{Targ}$ is the target duration of the mixing process.

Specifically, the weighted variation at the i-th time instant comprises the product between the Euclidean distance $d_i$ and the respective weight $W_i$ calculated at the i-th time instant.

Advantageously, the evaluation of the homogeneity of the mixture based on the weighted variations comprises the steps of comparing each weighted variation with a predefined threshold value, indicated hereinafter with *dwref,* and verifying the achievement of a certain degree of homogeneity as a function of the number of successive weighted variations which are less than the threshold value *dwref.*

In particular, the desired degree of homogeneity is defined by a minimum number Nd of successive weighted variations having values less than the threshold value *dwref.*

More in detail, the verification of the achievement of the desired degree of homogeneity comprises the following steps:

- at each weighted variation less than the threshold value *dwref,* incrementing a counter by 1;
- at each weighted variation greater than or equal to the threshold value *dwref,* resetting the counter to zero; and
- generating an achievement event of the desired degree of homogeneity when the counter reaches the minimum number *Nd.*

Advantageously, the comparison of each weighted variation with the threshold value *dwref* comprises a preliminary normalisation step of the values of the weighted variations, i.e., it comprises the following steps performed at the i-th time instant:

- normalising each weighted variation with respect to a weighted variation of maximum value among the weighted variations determined from the beginning of the mixing process up to the i-th instant; and
- comparing each normalised weighted variation with a normalised threshold value *dwrefn.*

In particular, the normalisation of the weighted variations consists of dividing each weighted variation by the aforesaid maximum value weighted variation so that the normalised weighted variations assume values comprised between 0 and 1. The threshold value *dwref* is transformed into the normalised threshold value *dwrefn* so that the latter also assumes a value comprised between 0 and 1. For example, normalised threshold value *dwrefn* is calculated by dividing the threshold value *dwref* by the aforesaid maximum value.

A normalised threshold value *dwrefn* equal to 0 is equivalent to a condition of ideal homogeneity, i.e., a degree of homogeneity corresponding to a sequence of perfectly identical absorbance spectra. A normalised threshold value *dwrefn* near 1 is equivalent to a condition of coarse homogeneity, i.e., a degree of homogeneity corresponding to large variations between absorbance spectra.

Therefore, with the preliminary normalisation, the verification of the achievement of the desired degree of homogeneity is performed based on the comparison between the normalised weighted variations and the normalised threshold value *dwrefn.*

With reference to the mode of use of figure 3, the method for monitoring the homogeneity of a mixture of ingredients of the invention differs from the mode related to figure 2 in the following respects.

The electromagnetic spectrum analyser 15 acquires a sequence of reflectance spectra of the mixture crossing the outlet device 13, and in particular the outlet ramp 14, at respective and consecutive time instants during the distribution process of the mixture in a trough.

For each spectrum variation obtained at the i-th time instant, a respective weighted variation is determined as a function of the actual duration of the mixing process $Tmix_{Act}$ and the target duration of the target mixing process $Tmix_{Targ}$. In particular, the weighted variations are equal to the respective spectrum variations multiplied by a single weight which remains constant during the distribution process and which is calculated by means of the following formula:

$$W = 1/\log_2\left(1 + \frac{Tmix_{Act}}{Tmix_{Targ}}\right).$$

The evaluation of the homogeneity of the mixture based on the weighted variations comprises the step of verifying the loss of the desired degree of homogeneity as a function of the number of successive weighted variations which are greater than the threshold value *dwref.*

In particular, the verification of the loss of a certain desired degree of homogeneity comprises the following steps:

- at each weighted variation greater than said threshold value *dwref,* incrementing a counter by 1;
- at each weighted variation less than or equal to said threshold value *dwref,* resetting the counter to zero; and
- generating a loss event of the desired degree of homogeneity when the counter reaches a preestablished minimum number *Nd.*

Advantageously, the verification of the loss of the desired degree of homogeneity is performed based on the comparison of the normalised weighted variations with the normalised threshold value *dwrefn.* In particular, each weighted variation is normalised with respect to that weighted variation of maximum value among the weighted variations determined during the mixing process preceding the distribution process.

According to an alternative embodiment, each weighted variation is normalised with respect to a weighted variation of maximum value between the weighted variations determined from the beginning of the distribution process up to the i-th instant (determination instant of the weighted variation). Such an embodiment can be used when the method for monitoring homogeneity is not used during the mixing process.

Advantageously, the distribution process is stopped when a certain desired degree of homogeneity is lost. At this point, the hatch of the outlet device 13 is closed, the electromagnetic spectrum analyser 15 is reassembled on the tank 5 (figure 2) and the mixing process in the tank 5 is reactivated to achieve the desired degree of homogeneity again.

According to a further embodiment not illustrated, the mixer wagon 1 comprises, instead of the tank 5, an oblong tank and, instead of the vertical-axis auger 8, at least one horizontal-axis auger arranged longitudinally in the oblong tank, i.e., parallel to the longitudinal axis of the mixer wagon 1.

According to a further embodiment not illustrated, the mixer wagon 1 is self-propelled, i.e., the wheels 3 are motorised.

According to a further embodiment not illustrated, the processing and control unit 19 is not integral with the mixer wagon 1, e.g., it is mounted on the towing vehicle, and is remotely and communicatively connected with the electromagnetic spectrum analyser 15 and the load cells 4 through wireless radio communication means of known type, for example comprising a gateway provided with a 4G/5G modem, or a WiFi router, or a pair of Bluetooth devices, depending on the distance to be covered and the radio propagation environment wherein it must operate. Therefore, the mixer wagon 1, the electromagnetic spectrum analyser 15 and the processing and control unit 19 form an apparatus for mixing the ingredients of an animal feed recipe.

According to a further embodiment not illustrated, a memory implemented in a cloud server is used to store data acquired from the electromagnetic spectrum analyser 15 and from the load cells 4 and/or data obtained from the processing of the method described above.

The main advantage of the method and the corresponding mixer wagon 1 described above is to optimise the achievement of the desired degree of homogeneity of the mixture, which in practice translates into an optimisation of the mixing time with respect to a given degree of homogeneity of the mixture to be achieved. This is mainly due to the following aspects.

Firstly, the method determines variations between successive pairs of absorbance spectra which are weighted as a function of an elapsed time from the start of the mixing process and a target mixing time, modulating the successively acquired variations over time according to the expected course of the mixing process and amplifying the distances measured in the instants preceding the target duration of the mixing process $Tmix_{Targ}$ until the unit weight is obtained at the moment when the time elapsed from the beginning of the mixing process to the i-th time instant *(Tpass$_i$)* coincides with the target duration of the target mixing process $Tmix_{Targ}$.

Furthermore, the desired degree of homogeneity is defined by a minimum number Nd of successive weighted variations having values less than said threshold value.

Finally, the counter which resets to zero when a weighted (normalised) variation greater than or equal to the threshold (normalised) value *dwrefn* is obtained also allows relevant absorbance spectra to be taken into account, even if they are far from the mean value of the variations.

It is observed that optimising the achievement of the desired degree of homogeneity inside the tank 5 is an important precondition for a correct distribution of the mixed ration along a trough such as to ensure that all animals in the group which are eating there have access to the same food, i.e., to the same nutrient supply, regardless of the position of the animals along the trough.

**Claims**

1. Method for monitoring the homogeneity of a mixture of ingredients for animal feed inside a container (5) of a mixer wagon (1) during a mixing process of the ingredients producing a mixture, or at an outlet device (13) of the mixer wagon (1) during a distribution process of the mixture in a trough following the mixing process, the method comprising:

    - acquiring, by means of an electromagnetic spectrum analyser (15) with a reading window (17) thereof facing towards the inside of the container (5) or, respectively, towards the flow of mixture crossing the outlet device (13), a sequence of reflectance spectra of the mixture at respective and consecutive time instants during the mixing process or, respectively, during the distribution process;
    - processing the reflectance spectra to obtain respective absorbance spectra ($A_i$);
    - determining variations between pairs of consecutive absorbance spectra or between pairs of consecutive mean absorbance spectra, each mean absorbance spectrum being calculated as the average of a plurality of consecutive absorbance spectra within a moving time window ending with the determination instant of the variation;
    - for each variation, determining a respective weighted variation as a function of an elapsed time ($Tpass_i$) from the start of the mixing process to the determination instant of the variation, or, respectively, an actual duration of the mixing process ($Tmix_{Act}$), and a target duration of the mixing process ($Tmix_{Targ}$); and
    - evaluating the homogeneity of the mixture based on the weighted variations.

2. Method according to claim 1, wherein each of said absorbance spectra ($A_i$) comprises a plurality of absorbance values ($a_{j,i}$) acquired for a corresponding plurality of wavelength values, in particular in the near-infrared range.

3. Method according to claim 1 or 2, wherein each of said variations comprises a respective Euclidean distance ($d_i$) or a respective squared Euclidean distance between two vectors defined by the relative pair of consecutive absorbance spectra ($A_{i-1}$, $A_i$) or defined by a processing of the relative pair of consecutive absorbance spectra or defined by the respective pair of consecutive mean absorbance spectra, in particular such a Euclidean distance ($d_i$) being

calculated by means of the following formula

$$d_{i-1,i} = \sqrt[2]{\sum_{j=1}^{n} (a_{j,i-1} - a_{j,i})^2} \; ,$$

wherein n is the number of wavelengths of each absorbance spectrum and $a_{j,i}$ is a value of the vector corresponding to the absorbance spectrum or the mean absorbance spectrum obtained for a j-th wavelength at an i-th time instant.

4. Method according to any one of claims 1 to 3, wherein when said reading window (17) is facing towards the inside of the container (5), said weighted variation is equal to the product of the respective variation by a respective weight ($W_i$), which is calculated by means of the following formula

$$W_i = 1/\log_2 \left(1 + \frac{Tpass_i}{Tmix_{Targ}}\right) \; ,$$

or, respectively, when the reading window (17) faces towards the flow of mixture crossing the outlet device (13), said weighted variation is equal to the product of the respective variation by a weight ($W$), which is calculated by means of the following formula

$$W = 1/\log_2 \left(1 + \frac{Tmix_{Act}}{Tmix_{Targ}}\right) \; ,$$

wherein $Tpass_i$ is the elapsed time from the beginning of the mixing process to the i-th time instant at which the variation is determined, $Tmix_{Act}$ is the actual duration of the mixing process and $Tmix_{Targ}$ is the target duration of the mixing process.

5. Method according to any one of claims 1 to 3, wherein evaluating the homogeneity of the mixture based on the weighted variations comprises:

    - comparing each weighted variation with a predefined threshold value ($dwref$); and
    - when said reading window (17) faces towards the inside of the container (5), verifying that a certain desired degree of homogeneity has been reached as a function of the number of successive weighted variations which are less than the threshold value ($dwref$); or
    - when said reading window (17) is facing towards the flow of mixture crossing the outlet device (13), verifying the loss of a desired degree of homogeneity as a function of the number of successive weighted variations which are greater than the threshold value *(dwref).*

6. Method according to claim 5, wherein said desired degree of homogeneity is defined by a minimum number *(Nd)* of successive weighted variations having values less than said threshold value when said reading window (17) is facing towards the inside of the container (5), or which have values greater than the threshold value when said reading window (17) is facing towards the flow of mixture crossing the outlet device (13).

7. Method according to claim 5, wherein when said reading window is facing towards the inside of the container (5), verifying the achievement of a certain desired degree of homogeneity comprises:

   - at each weighted variation less than said threshold value *(dwref),* incrementing a counter by 1;
   - at each weighted variation greater than or equal to said threshold value *(dwref),* resetting the counter to zero; and
   - generating an achievement event of the desired degree of homogeneity when the counter reaches a preestablished minimum number *(Nd).*

8. Method according to claim 5, wherein when said reading window (17) is facing towards the flow of mixture crossing the outlet device (13), verifying the loss of a certain desired degree of homogeneity comprises:

   - at each weighted variation greater than said threshold value *(dwref),* incrementing a counter by 1;
   - at each weighted variation less than or equal to said threshold value *(dwref),* resetting the counter to zero; and
   - generating a loss event of the desired degree of homogeneity when the counter reaches a preestablished minimum number *(Nd).*

9. Method according to claim 5 or 6, wherein comparing each weighted variation with a predefined threshold value *(dwref)* comprises:

   - normalising each weighted variation with respect to a weighted variation of maximum value between the weighted variations determined from the beginning of the mixing process, or from the beginning of the distribution process, up to said determination instant of the variation, when said reading window (17) is facing towards the inside of the container (5), or, respectively, when the reading window (17) is facing towards the flow of mixture crossing the outlet device (13); and
   - comparing each normalised weighted variation with a normalised threshold value *(dwrefn).*

10. Method according to claim 5 or 6, wherein said distribution process follows said mixing process; comparing each weighted variation with a predefined threshold value *(dwref)* comprising:

   - when the reading window (17) is facing towards the flow of mixture crossing the outlet device (13), normalising each weighted variation with respect to a weighted variation of maximum value among the weighted variations determined during the mixing process; and
   - comparing each normalised weighted variation with a normalised threshold value *(dwrefn).*

11. Method according to any one of claims 1 to 9, wherein said reading window (17) is facing towards the inside of the container (5) and the mixing process is performed by a motorised mixing system (7) applied to the container (5), the method comprising:

   - stopping the motorised mixing system (7) to suspend the mixing process when a certain desired degree of homogeneity is reached.

12. Method according to any one of claims 1 to 9, wherein said reading window (17) is facing towards the flow of mixture crossing the outlet device (13), the method comprising:

   - stopping the distribution of the mixture when a certain desired degree of homogeneity is lost.

13. Apparatus for mixing ingredients of an animal feed recipe, comprising: a mixer wagon (1), which comprises a container (5) designed to contain the ingredients, a motorised mixing system (7) applied to the container (5) for mixing the ingredients in the container (5), and an outlet device (13) for the exit of the mixture; an electromagnetic spectrum analyser (15) which can be mounted on the container (5) with a reading window (17) thereof facing towards the inside of the container (5), or on the outlet device (13) with the reading window (17) facing towards the flow of mixture crossing, in use, the outlet device (13); and processing and control means (19), which are configured to implement the method according to any one of claims 1 to 12.

FIG.1

FIG.2

FIG.3

Europäisches
Patentamt

European
Patent Office

Office européen
des brevets

# EUROPEAN SEARCH REPORT

**Application Number**

EP 24 16 8657

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/146615 A1 (MCDONALD JOHN THOMAS [US] ET AL) 29 July 2004 (2004-07-29) | 1-5 | INV. A01K5/00 |
| Y | * [0085, 0124, 0129, 0151-0154, 0158, | 11-13 | G01N21/3563 |
| A | 0162-0168, 0179, 0214-0221, 0223, 0250, 0266, 0294-0300, 0312-0313]; claims 1, 10; figures 7, 14-16, 22 * | 6-10 | G01N21/359 |
| | - - - - - | | |
| Y | US 2020/309685 A1 (LIET ROBERT JAN [NL]) 1 October 2020 (2020-10-01) | 11-13 | |
| A | * [0018, 0020, 0063, 0073, 0085, 0087]; claim 1; figure 1 * | 1 | |
| | - - - - - | | |
| A | IT 2018 0000 7618 A1 (DINAMICA GENERALE SPA [IT]) 30 January 2020 (2020-01-30) * page 5, line 10 - line 20; claims 1-3, 11-12, 5-6 * * page 3, line 20 - line 25 * * page 7, paragraph 3 * * page 7, line 25 - page 7, line 26 * | 1-6 | |
| | - - - - - | | TECHNICAL FIELDS SEARCHED (IPC) |
| A | US 10 455 763 B2 (DINAMICA GENERALE S P A [IT]) 29 October 2019 (2019-10-29) * claim 1; figure 1 * | 1 | A01K |
| | - - - - - | | G01N |

The present search report has been drawn up for all claims

| Place of search | Date of completion of the search | Examiner |
|---|---|---|
| The Hague | 29 August 2024 | Steinbock, Lorenz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 8657

This annex lists the patent family members relating to the patent documents cited in the above-mentioned European search report.
The members are as contained in the European Patent Office EDP file on
The European Patent Office is in no way liable for these particulars which are merely given for the purpose of information.

29-08-2024

| Patent document cited in search report | | Publication date | Patent family member(s) | | Publication date |
|---|---|---|---|---|---|
| US 2004146615 | A1 | 29-07-2004 | CA | 2443098 A1 | 24-10-2002 |
| | | | EP | 1381849 A2 | 21-01-2004 |
| | | | JP | 2004530875 A | 07-10-2004 |
| | | | US | 2004146615 A1 | 29-07-2004 |
| | | | WO | 02084262 A2 | 24-10-2002 |
| US 2020309685 | A1 | 01-10-2020 | CA | 3070334 A1 | 25-09-2020 |
| | | | EP | 3714685 A1 | 30-09-2020 |
| | | | US | 2020309685 A1 | 01-10-2020 |
| IT 201800007618 | A1 | 30-01-2020 | ------------------------------- | | |
| US 10455763 | B2 | 29-10-2019 | NONE | | |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 23208976
- DE 102010033886 A1

- EP 4223147 A1